# EUROPEAN PATENT APPLICATION

(11) **EP 2 480 003 A1**
(43) Date of publication of application: **25.07.2012**
(21) Application number: 12150083.9
(22) Date of filing: 03.01.2012
(51) Int. Cl.: H04N 21/414, H04N 21/41, H04N 21/436, H04N 21/4402

(54) **Electronic apparatus for remotely controlling a mobile information terminal device**

(30) Priority: 04.01.2011 JP 2011000084
(71) Applicant: Alpine Electronics, Inc., Tokyo (JP)
(72) Inventor: Shike, Akihiro, Iwaki-city, Fukushima (JP)
(74) Representative: Klunker . Schmitt-Nilson . Hirsch

(57) **Abstract**

Provided is an electronic apparatus which enables reduction in the load required to process screen information when screen information from a mobile information terminal device is not selected. An electronic apparatus (40) of the present invention is capable of displaying screen information provided by a mobile terminal device (20), establishes connection with the mobile terminal (20) in a terminal mode (S201), receives screen information from the mobile terminal (20), and displays the screen information. When a medium provided in the electronic apparatus (40) is selected by a user (S202), the screen information is switched to an application program screen of the selected medium (S203), and an instruction for restricting the transfer of the screen information from the mobile terminal device (20) is transmitted (S205).

## Description

The present invention relates to electronic apparatuses which can remotely control a mobile information terminal device when the mobile information terminal device is connected to such an electronic apparatus, and specifically to transfer control of video data and audio data transferred from the mobile information terminal device.

Sophisticated portable devices, typified by smart phones, are being increasingly used. When such a portable device is carried into a car, media data of the portable device can be utilized by an in-car electronic apparatus by connecting the portable device to the in-car electronic apparatus.

For example, JP 2008078696 A discloses a mobile phone that obtains predetermined information from a server by automatically activating an application program when it is detected that the mobile phone has been carried into a car. JP 2010193319 A discloses a method of providing a driver with relevant information safely and at relevant timings, in an in-car system that is connected to a mobile terminal device through wireless communication.

An in-car electronic apparatus, when connected to a mobile information terminal device, such as a smart phone, e.g. using a USB cable or the like, enters a terminal mode which allows the application programs of the mobile information terminal device to be remotely operated. In the terminal mode, direct input operations for the mobile information terminal device are restricted (locked). Instead input operations are permitted only from the in-car electronic apparatus. For example, application programs such as a navigation program and an audio reproduction program in the mobile information terminal device can be activated from the in-car electronic apparatus side. The mobile information terminal device transfers video data and audio data regarding the activated application programs to the in-car electronic apparatus.

In the terminal mode, video data and audio data transferred from the mobile information terminal device are digital data and, specifically, the amount of video data is very large. Hence large bandwidths for a USB and a CPU bus are required to process the data on the in-car electronic apparatus side. For example, when 800 × 480 32-bit color video is to be displayed at a rate of 10 frames per second (10 fps), a throughput of 120 Mbps or higher is required of both the USB bus and CPU in the in-car electronic apparatus.

The in-car electronic apparatus manages the sources of many media, and enables selection of sources other than the mobile information terminal device, for example, reproduced multimedia data of an iPod, a hard disk drive (HDD), a DVD, or the like. In the case of an in-car electronic apparatus which is not provided with a sufficient CPU bus bandwidth and CPU processing power for allowing a plurality of sources to be simultaneously operated, one of the sources is exclusively selected, whereby the sources are prevented from being simultaneously operated. However, in the terminal mode, the in-car electronic apparatus continues to receive video data and audio data from a mobile information terminal device, and even when the in-car electronic apparatus switches to another media source, the data continues to be received through USB communication in parallel. Hence, much of the CPU bus bandwidth of the in-car electronic apparatus is used. This may cause audio or video to be interrupted during reproduction of other media sources.

Accordingly, it may be an object of the present invention to provide an electronic apparatus which, in view of the above-described problems, enables reduction in the load required to process screen information when screen information from a mobile information terminal device is not selected.

The object is solved by the features of the independent claims 1 and 9. Further embodiments are defined in the respective dependent claims.

Accordingly, an electronic apparatus according to the present invention is capable of displaying screen information provided by a mobile information terminal device and includes: connection means that establishes connection with the mobile information terminal device; receiving means that receives the screen information through the connection means; display means that displays the screen information or a screen of an application program installed on the electronic apparatus; and transfer control means that, when the screen information has been switched to the screen of the application program installed on the electronic apparatus, restricts transfer of the screen information from the mobile information terminal device.

In one embodiment, the transfer control means transmits an instruction for terminating the transfer of the screen information from the mobile information terminal device to the electronic apparatus.

Alternatively or additionally, the transfer control means terminates transmission to the mobile information terminal device of an update request instruction requesting an update of the screen information.

Alternatively or additionally, the transfer control means transmits to the mobile information terminal device a size change instruction for reducing a data size of video data of the screen information.

Alternatively or additionally, the transfer control means increases a cycle time for transmitting instructions requesting transfer of the screen information.

Alternatively or additionally, the transfer control means transmits an instruction requesting transfer of the screen information when an interrupt generation signal is received from the mobile information terminal device through the connection means. Preferably, the interrupt generation signal is transmitted when an intersection guide is displayed while being guided to a destination along a searched route.

Alternatively or additionally, the switching from the screen information to the screen of the application program installed on the electronic apparatus is generated in response to selection by a user of the application program installed on the electronic apparatus.

A media system according to the present invention includes the above-described electronic apparatus and a mobile information terminal device connected to the electronic apparatus, and the mobile information terminal device, when receiving an update request instruction from the electronic apparatus, transfers the screen information to the electronic apparatus in response to the update request instruction.

Alternatively or additionally, a media system of the present invention includes the above-described electronic apparatus and a mobile information terminal device connected to the electronic apparatus, and the mobile information terminal device, upon receipt of a size change instruction from the electronic apparatus, transfers video data having a reduced data size in response to the size change instruction.

Alternatively or additionally, the mobile information terminal device transmits an interrupt generation signal to the electronic apparatus when an intersection guide is to be displayed while being guided to a destination along a searched route.

A transfer control program according to the present invention is executed by an electronic apparatus capable of displaying screen information provided by a mobile information terminal device, and includes the steps of: establishing connection between the mobile information terminal device and the electronic apparatus; receiving the screen information from the mobile information terminal device; and restricting transfer of the screen information from the mobile information terminal device when the screen information has been switched to a screen of an application program installed on the electronic apparatus.

A method of transfer control according to the present invention is a method of transfer control of screen information in a media system including a mobile information terminal device and an electronic apparatus capable of displaying screen information provided by the mobile information terminal device, and includes the steps of: establishing connection between the mobile information terminal device and the electronic apparatus; selecting an application program installed on the mobile information terminal device using input means of the electronic apparatus; transferring screen information regarding the selected application program installed on the mobile information terminal device to the electronic apparatus from the mobile information terminal device; displaying the transmitted screen information in the electronic apparatus; switching, when an application program installed on the electronic apparatus is selected by a user, the screen information to a screen regarding the selected application program installed on the electronic apparatus; and restricting transfer of the screen information in response to the selection of the application program by the user or the switching of the screen information.

According to the present invention, the load required to process screen information when screen information from a mobile information terminal device is not selected is reduced.

### BRIEF DESCRIPTION OF THE DRAWINGS

Fig. 1 is a block diagram of a media system according to embodiments of the present invention;
Figs. 2A and 2B are block diagrams illustrating a typical configuration of the in-car electronic apparatus illustrated in Fig. 1;
Fig. 3 is a block diagram illustrating a typical configuration of the mobile terminal device illustrated in Fig. 1;
Fig. 4 is a flowchart describing the basic operation of a terminal mode according to the embodiments of the present invention;
Fig. 5 is a flowchart describing a transfer control operation according to a first embodiment of the present invention;
Figs. 6A and 6B are flowcharts describing a transfer control operation according to a second embodiment of the present invention;
Fig. 7 is a flowchart describing a transfer control operation according to a third embodiment of the present invention;
Fig. 8 is a flowchart describing a transfer control operation according to a fourth embodiment of the present invention; and
Figs. 9A and 9B are diagrams illustrating examples of two-screen display for interrupt information and the like.

### DESCRIPTION OF EMBODIMENTS

Embodiments of the present invention will be described in detail with reference to the drawings. In preferred embodiments, a motor car is illustrated as a moving object and description will be made of an example in which an electronic apparatus is mounted on a motor car and a mobile information terminal device is connected to the electronic apparatus.

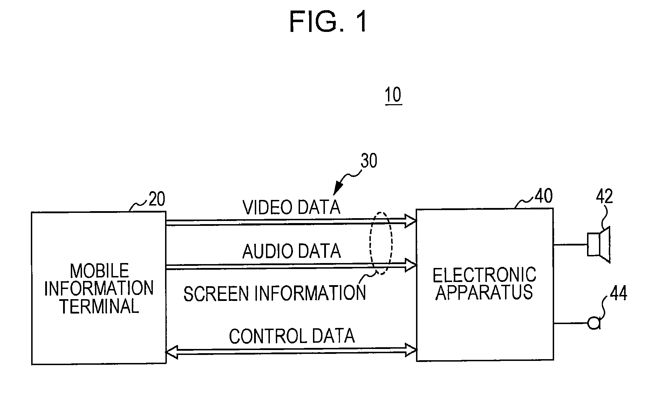

Fig. 1 is a block diagram of a media system according to embodiments of the present invention. A media system 10 of the present embodiment is configured to include a mobile information terminal device (hereinafter called a mobile terminal) 20, an in-car electronic apparatus (hereinafter called an electronic apparatus) 40 to which the mobile terminal 20 is connected through connection means 30.

The mobile terminal 20 may be an information processing apparatus or a computer apparatus which performs various types of information processing in response to a user input, and the functions thereof are not limited specific functions. For example, the mobile terminal 20 may be a mobile phone, a smart phone, a mobile audio player, a mobile video player, a portable information processing terminal, or the like.

The electronic apparatus 40 may be an information processing apparatus or a computer apparatus which performs various types of information processing in response to a user input, and the functions thereof are not limited specific functions. For example, the electronic apparatus 40 may have a navigation function, an audio function, a video function, a television function, and/or a radio function.

The connection means 30 connecting the electronic apparatus 40 and the mobile terminal 20 may be either a wire cable or a wireless signal. For example, a USB cable, a wireless LAN, or Bluetooth may be used to connect the two devices.

In the media system 10 of the present embodiment, when the mobile terminal 20 is connected to the electronic apparatus 40, the two devices operate in a terminal mode. In the terminal mode, video data, audio data, control data, and the like are transferred between the two devices, and screen information displayed by the mobile terminal 20 is displayed by the electronic apparatus 40. In addition, in the terminal mode, direct input operations for the mobile terminal 20 are restricted (locked) and user input operations are permitted only from the electronic apparatus 40. In other words, a user can remotely operate the application programs installed on the mobile terminal 20 through operation of the electronic apparatus 40 displacing the screen information of the mobile terminal 20.

When an application program installed on the mobile terminal 20 is activated in the terminal mode, screen information transferred from the mobile terminal 20 to the electronic apparatus 40 includes video data and audio data. The transmission of the video data may be controlled for example by using the Remote Framebuffer (RFB) Protocol, and the transmission of the audio data may be controlled for example by using the Real-time Transport Protocol (RPT). Operation information (such as coordinate information of a touch panel and key input information), control information, transmitted from the electronic apparatus 40 to the mobile terminal 20, and information about an interrupt from the mobile terminal 20, are communicated between the electronic apparatus 40 and the mobile terminal 20 by using a common data bus which enables two-way communication.

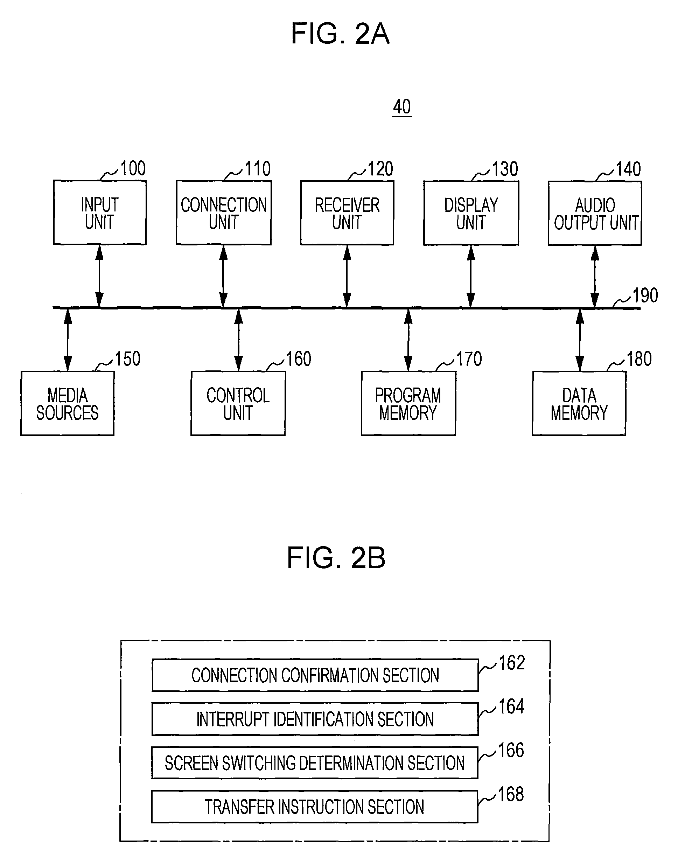

Fig. 2A is a block diagram illustrating a typical configuration of the electronic apparatus 40. Referring to Fig. 2A, the electronic apparatus 40 includes an input unit 100 that receives an input from a user, a connection unit 110 that establishes a connection with the mobile terminal 20, a receiver unit 120 that receives data transferred from the mobile terminal 20 and stores the data in a buffer memory such as a DRAM, a display unit 130 that displays screen information and the like transferred from the mobile terminal 20 on a display, an audio output unit 140 that outputs audio, media sources 150 provided in or managed by the electronic apparatus 40, a control unit 160 that controls various units, a program memory 170 storing programs for executing application software and the like, a data memory 180 capable of storing various types of data such as music, video, and maps, and a bus 190 connecting the various units.

Preferably, the input unit 100 includes a touch panel for the display, in addition to a remote control or a cursor, as an input device and a microphone 44 used for a hands-free phone call.

During a hands-free phone call through the mobile terminal 20, sound may be output from a loudspeaker 42 in a car.

The media sources 150 reproduce media data recorded on recording media such as a CD, a DVD, and an HDD, and output received television or radio media data. Selection of desired media sources is performed through user input.

The program memory 170 contains a program for controlling connection with the mobile terminal 20, a program for controlling the terminal mode, a program for executing applications for the media sources 150, and the like.

The control unit 160 includes a processing unit such as a central processing unit (CPU) or a microcomputer and controls the various units by executing programs in the program memory 170. Although not illustrated here, the control unit 160, by receiving information regarding the operation states of a motor car, such as parking brake on/off information, car speed information, and car position information, can perform control in accordance with the information.

Fig. 2B is functional block diagram of a transfer control program for the terminal mode contained in the program memory 170. The transfer control program controls transfer of screen information from the mobile terminal 20 when the media sources 150 housed in the electronic apparatus 40 are selected by a user in the terminal mode. The transfer control program includes a connection confirmation section 162 that confirms connection with the mobile terminal 20, an interrupt identification section 164 that identifies that interrupt information has been transmitted from the mobile terminal 20, a screen switching determination section 166 that determines whether or not the screen displayed by the display unit 130 has been switched from screen information transferred from the mobile terminal 20 to a source screen of an application program for the media sources 150 housed in the electronic apparatus 40, and a transfer instruction section 168 that controls transfer of screen information from the mobile terminal 20, i.e., video data and/or audio data on the basis of the results of the interrupt identification section 164 and the screen switching determination section 166.

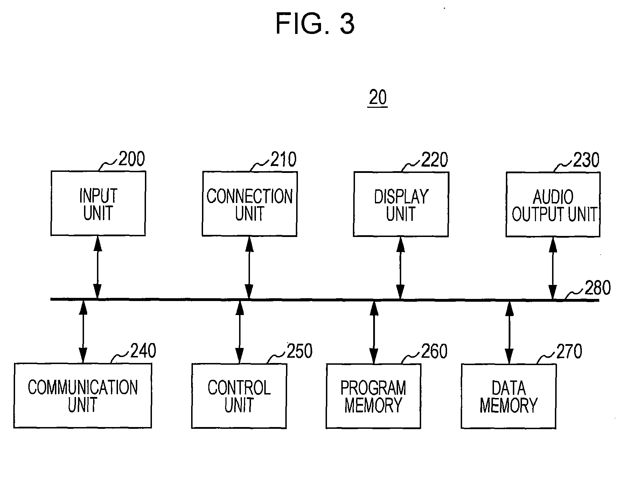

Fig. 3 is a block diagram illustrating a typical configuration of a mobile terminal. A mobile terminal 20 includes an input unit 200 that receives an input from a user, a connection unit 210 that establishes connection with the electronic apparatus 40, a display unit 220 that displays various images on a display, an audio output unit 230 that outputs audio, a communication unit 240 that communicates with an external server and enables phone communication with another mobile phone, a control unit 250, a program memory 260 that stores programs such as application programs installed on the mobile terminal 20, a data memory 270 that stores data such as music, video and maps, and a bus 280 that connects these units.

Preferably, the program memory 260 contains a program that controls the terminal mode executed when the electronic apparatus 40 is connected. In the terminal mode, the mobile terminal 20 transfers screen information to be displayed by the display unit 220 to the electronic apparatus 40, and locks input operation for the input unit 200. The program memory 260 stores a program that interprets an instruction regarding transfer control transmitted from the electronic apparatus 40, and performs processing in accordance with the instruction. The mobile terminal 20 is provided with a program that transmits an interrupt generation signal to the electronic apparatus 40 when an interrupt screen is to be generated.

For example, when the mobile terminal 20 is executing a navigation program, the mobile terminal 20 transmits an interrupt generation signal to the electronic apparatus 40 as a control signal to display an interrupt screen regarding intersection guide information.

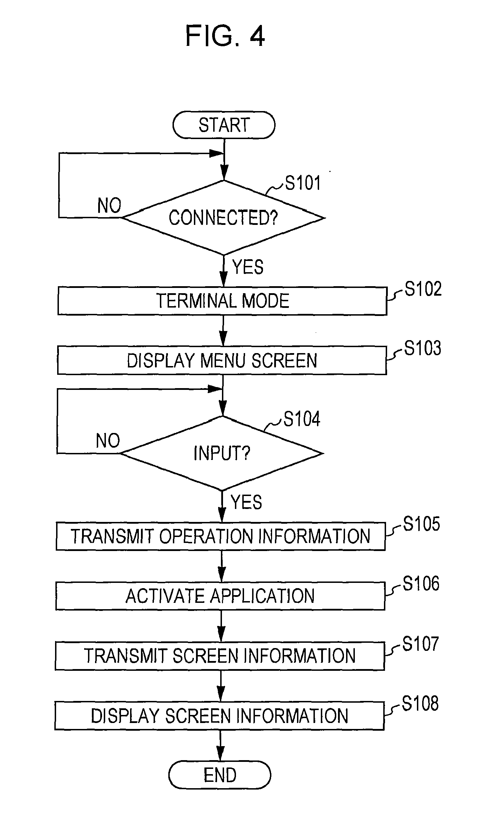

Fig. 4 is a flowchart describing the basic operation of the terminal mode of the present embodiment. The electronic apparatus 40 and the mobile terminal 20 determine whether or not they are connected to each other through the connection units 110 and 210 (S101), and when connection is confirmed, the electronic apparatus 40 and the mobile terminal 20 operate in the terminal mode (S102). A sufficient condition for transition to the terminal mode is that connection allowing transmission and reception of screen/operation information is confirmed. In the present example, transition to the terminal mode is allowed when the electronic apparatus 40 and the mobile terminal 20 are connected through a USB cable or a wireless LAN.

After transition to the terminal mode, a menu screen is displayed by the display unit 130 (S103), and the icons of application programs which can be remotely controlled by the electronic apparatus 40 are displayed, for example. While the car is moving, displaying the icons of remotely controllable application programs may be restricted. The electronic apparatus 40 monitors whether or not an input operation (for example, touch input) is performed on the menu screen through the input unit 100 (S104), and when an input has been made, operation information such as input coordinates or key information is transmitted to the mobile terminal 20 (S105). The mobile terminal 20 activates a corresponding application program on the basis of the received operation information (S106). When the application program is activated, the mobile terminal 20 transfers screen information which is the same as that displayed by the display unit 220 to the electronic apparatus 40 (S107). The transferred screen information is displayed by the display unit 130 of the electronic apparatus 40 and sound is output from a loudspeaker (S108).

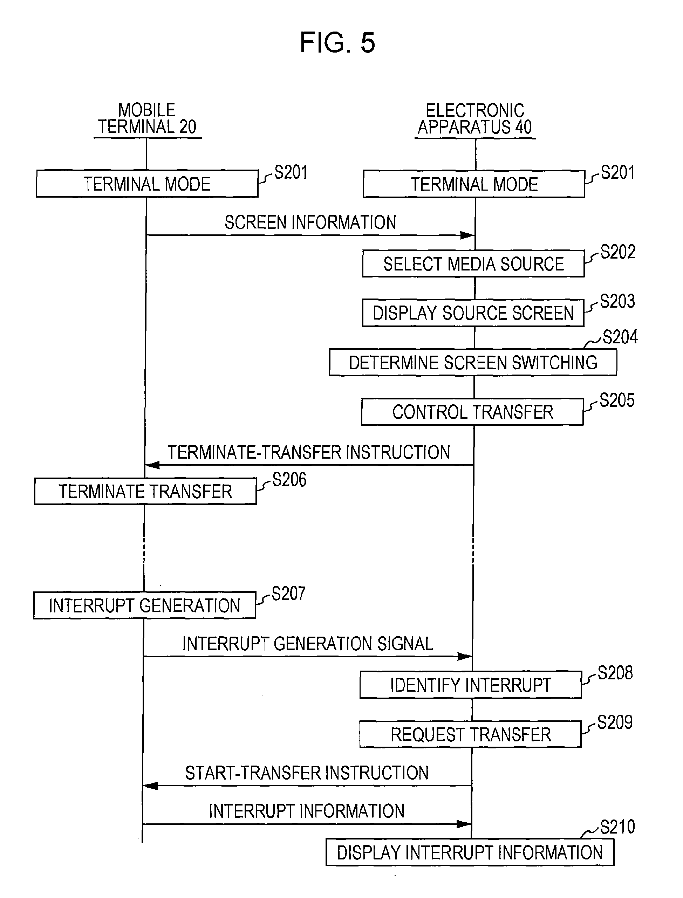

Transfer control of screen information in the terminal mode according to a first embodiment of the present invention will now be described with reference to the flow illustrated in Fig. 5.

When the mobile terminal 20 and the electronic apparatus 40 are connected to each other, for example by a USB cable or a wireless LAN or the like, the connection confirmation section 162 recognizes that the two devices have been connected by the connection units 110 and 210. On the basis of the recognition result, the control units 160 and 250 make both the devices enter the terminal mode (S201).

In the terminal mode, when a user remotely controls the mobile terminal 20 via the electronic apparatus 40, and activates a desired application program installed on the mobile terminal 20, screen information regarding the application program is transferred from the mobile terminal 20 to the electronic apparatus 40. The screen information includes video data and/or audio data, which are preferably transmitted in data packets. The video data and audio data are temporarily stored in a buffer memory of the receiver unit 120. The video data, through necessary processing, is displayed by the display unit 130, and the audio data, through necessary processing, is output from the loudspeaker 42.

While the terminal mode continues, a user can select among the media sources 150 provided in the electronic apparatus 40 (S202). For example, a user can switch a navigation application program of the mobile terminal 20 to an application program for reproducing audio data stored in an HDD of the media sources 150 or an application program for reproducing video data from a DVD of the media sources 150. At this time, the electronic apparatus 40 continues to be connected to the mobile terminal 20 through the connection means 30 such as e.g. a USB cable, and the screen information of a navigation application program continues to be output from the mobile terminal 20. The screen information is received on the physical layer or a lower logical layer, but the screen information is not utilized for application data on a layer above these layers. In other words, the screen information from the mobile terminal 20 is stored in the buffer memory of the receiver unit 120 and subjected to necessary processing, but not displayed by the display unit 130. The control unit 160 instead displays a screen (hereinafter called a source screen) regarding an application program for the selected media source 150 on the display unit 130 (S203).

The screen switching determination section 166 determines whether or not information displayed by the display unit 130 of the electronic apparatus 40 has been switched from screen information from the mobile terminal 20 to a source screen (S204). It may be determined whether or not the screen has been switched between directly on the basis of identification information included in a screen displayed by the display unit 130 or may be determined by detecting whether or not a user has selected any of the media sources 150, or whether or not an application program for the media sources 150 has been activated.

When it is determined by the screen switching determination section 166 that switching to a source screen has been made, the transfer instruction section 168 controls transfer of screen information from the mobile terminal 20 (S205).

In a first embodiment, the transfer instruction section 168 transmits a terminate-transfer instruction to the mobile terminal 20 as control data. The mobile terminal 20, upon receipt of the terminate-transfer instruction through the connection unit 210, terminates the transfer of the screen information (video and audio data) of the selected application program (S206).

As described above, screen information from the mobile terminal 20 continues to be received by the electronic apparatus 40 even when a user has selected an application program for the media sources 150 of the electronic apparatus 40. In other words, the control unit 160 needs to allocate a certain amount of resources required to receive the screen information from the mobile terminal 20 and the associated processing even when the application program for the media sources 150 is being processed. Hence, when it becomes impossible for the control unit 160 to allocate sufficient resources to an application program for the media sources 150, a problem arises in that reproduction of video data or audio data is temporarily stopped. However, in the present embodiment, when an application program for the media sources 150 is selected by a user, that is, when information displayed by the display unit 130 is switched from screen information to a source screen, the electronic apparatus 40 transmits to the mobile terminal 20 an instruction (instruction to terminate transferring in the present example) to restrict transferring of screen information, whereby screen information from the mobile terminal 20 is restricted or terminated. Hence, the control unit 160 no longer needs to allocate resources required to receive the screen information from the mobile terminal 20 and the associated processing. As a result, resources can be effectively allocated to processing for the application program for the media sources 150.

When an application program running on the mobile terminal 20 is an application program which causes interrupt information to be generated (S207), the mobile terminal 20 transmits an interrupt generation signal to the electronic apparatus 40 as control data. An example of the application program which may cause interrupt information to be generated is a navigation application program. For instance, when the car approaches the vicinity of an road intersection while being guided to a destination along a searched route in navigation, the navigation application program causes an intersection guide screen to be generated as interrupt information. As another example, when there is an incoming call to the mobile terminal 20, an interrupt signal may also be generated.

When the mobile terminal 20 transmits an interrupt generation signal to the electronic apparatus 40, the interrupt identification section 164 identifies the interrupt generation signal (S208), and when this is identified, the transfer instruction section 168 performs control for requesting the transfer of interrupt information (S209). In other words, the transfer instruction section 168 transmits a start-transfer instruction to the mobile terminal 20 as control data. The mobile terminal 20, in response to the start-transfer instruction, transmits interrupt information to the electronic apparatus 40. The electronic apparatus 40, upon receipt of the interrupt information, displays the interrupt information during displaying of a source screen (S210). For example, an intersection guide screen is displayed as interrupt information while DVD video is being displayed.

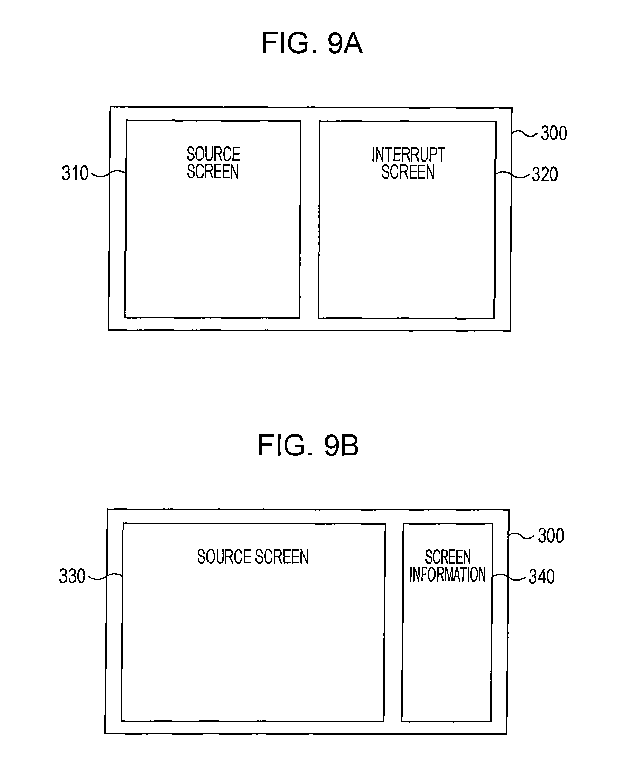

An example for a method of displaying interrupt information is illustrated in Fig. 9A, by dividing a display screen 300 into two screens 310 and 320, a source screen may be displayed on the screen 310 and an interrupt screen may be displayed on the screen 320.

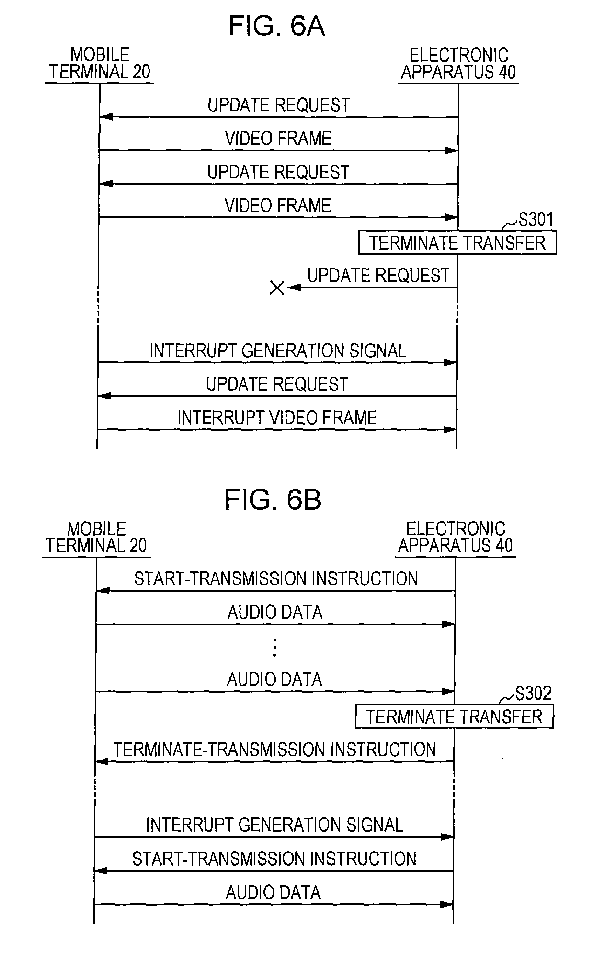

Transfer control according to a second embodiment of the present invention will now be described with reference to the flows illustrated in Figs. 6A and 6B.

Fig. 6A illustrates the transfer control of video data and Fig. 6B illustrates the transfer control of audio data. In the terminal mode of the second embodiment, when the screen information of the mobile terminal 20 is displayed by the display unit 130, the transfer instruction section 168 issues an update request instruction to the mobile terminal 20. The mobile terminal 20, upon receipt of the update request instruction, transmits video frames to the electronic apparatus 40. Preferably, the mobile terminal 20 transmits a single frame for a single update request instruction. For example, the transfer instruction section 168 transfers five update request instructions per second and the display unit 130 displays five video frames per second.

Similarly to the first embodiment, when a user selects among the media sources 150, the screen switching determination section 166 determines that information displayed by the display unit 130 has been switched from the screen information of the mobile terminal 20 to a source screen, and the transfer instruction section 168 makes transfer of screen information be terminated (S301). That is, in the second embodiment, the transfer instruction section 168 terminates the transmission of an update request instruction. Thereby, the mobile terminal 20, since there are no update request instructions sent from the electronic apparatus 40, does not transmit a video frame.

When an interrupt is generated in an application program of the mobile terminal 20, an interrupt generation signal is transmitted from the mobile terminal 20 to the electronic apparatus 40 as control data, similarly to the first embodiment. When the interrupt generation signal is identified by the interrupt identification section 164, the transfer instruction section 168 transmits an update request instruction to the mobile terminal 20. The mobile terminal 20 transmits an interrupt video frame to the electronic apparatus 40 in response to the update request instruction. Interrupt information may be designed to be displayed only for a predetermined period of time.

In the second embodiment, regarding audio data, the transfer instruction section 168 transmits a start-transmission instruction to the mobile terminal 20 when screen information is displayed. The mobile terminal 20, once a start-transmission instruction is received, continues to transmit audio data even when a start-transmission instruction is not received later. When it is determined by the screen switching determination section 166 that switching to a source screen has been made, the transfer instruction section 168 transmits to the mobile terminal 20 a terminate-transmission instruction to make transmission of audio data be terminated (S302). Thereby, the mobile terminal 20 terminates transmission of audio data. In the case in which an interrupt has been generated, the transfer instruction section 168 transmits a start-transmission instruction to the mobile terminal 20 when an interrupt generation signal has been identified by the interrupt identification section 164.

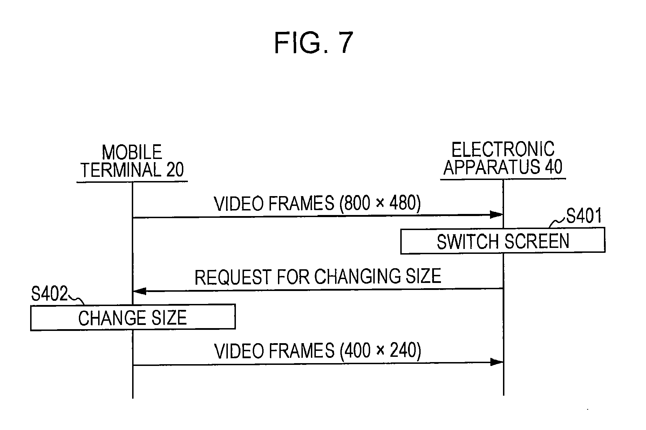

A third embodiment according to the present invention will now be described with reference the flow illustrated in Fig. 7.

In the first and second embodiments, examples have been described in which transfer of screen information is terminated in response to switching to a source screen. In the third embodiment, transfer control is performed such that the data size of video frames is changed in response to switching to a source screen. Similarly to the first and second embodiments, when screen information from the mobile terminal 20 is switched to a source screen in the terminal mode (S401), the transfer instruction section 168 transmits an instruction requesting a size change to the mobile terminal 20.

Usually, the mobile terminal 20 can generate various video frames with a plurality of the numbers of pixels so as to support various sizes of the displays of the electronic apparatus 40 to which the mobile terminal 20 is connected. The transfer instruction section 168 transmits an instruction requesting a size change so as to make the number of pixels of a video frame smaller than that of a video frame to be displayed on the display unit 130. For example, when the number of pixels of a video frame transmitted from the mobile terminal 20 is 800 × 480, the transfer instruction section 168 transmits an instruction requesting a size change so as to make the data size smaller than this size. The mobile terminal 20, upon receipt of the instruction requesting a size change, transmits to the electronic apparatus 40 video frames with, for example, 400 × 240 pixels, which are fewer than 800 × 480 pixels, which can be generated by the mobile terminal 20.

The receiver unit 120 of the electronic apparatus 40 receives video frames whose size is smaller than that of the video frames displayed on the display unit 130. Since the amount of data is reduced, the bandwidth of the bus used by the control unit 160 is reduced and the load on the bus is reduced. For example, when video frames with 800 x 480 pixels are changed to video frames with 400 × 240 pixels, the amount of received data is reduced to a quarter.

Further, in the third embodiment, when a user terminates an application program for the media sources 150, the transfer instruction section 168 issues an instruction requesting a size change so as to make the video frames have the original size, thereby performing switching to display of the original-size video frames transferred from the mobile terminal 20. In this case, since video frames from the mobile terminal 20 are continuously received, the control unit 160 can immediately make video frames (screen information) be displayed by the display unit 130.

Note that screen information from the mobile terminal 20 may be made not to be displayed while the media sources 150 are being selected, but other than this, as illustrated in Fig. 9B, a source screen may be displayed on one screen 330 of a two-screen display screen 300 and screen information, having a reduced screen size, from the mobile terminal 20 may be displayed on the other screen 340.

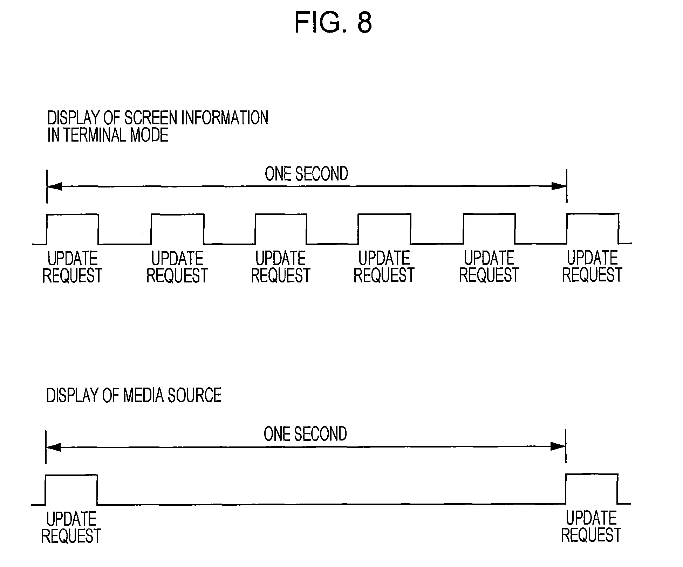

A fourth embodiment of the present invention will now be described with reference to Fig. 8.

In the fourth embodiment, when screen information from the mobile terminal 20 is switched to a source screen, i.e., when an application program for the media sources 150 has been selected by a user, the transmission cycle time of screen information (video frames) transferred from the mobile terminal 20 is increased. The upper part of Fig. 8 illustrates a timing chart for displaying screen information from the mobile terminal 20. As described in the second embodiment, the transfer instruction section 168 transmits update request instructions to the mobile terminal 20 with predetermined cycles, and the mobile terminal 20 transmits video frames in response to the update request instructions. For example, the transfer instruction section 168 transmits the update request instructions to the mobile terminal 20 at a frequency of five times per second.

The lower part of Fig. 8 is a timing chart illustrating transfers of screen information when an application program for a media source is selected. When a user selects an application program for the media sources 150, the transfer instruction section 168 increases the cycle time or decreases the frequency with which update request instructions are issued. For example, the transfer instruction section 168 issues update request instructions once per second. Thereby, the amount of data transferred from the mobile terminal 20 per unit time is reduced, and resources allocated to the receiver unit 120 by the control unit 160 are reduced.

Although the preferred embodiments of the present invention have been described above in detail, the present invention is not limited to the specific embodiments, and various variations and modifications are possible within the scope of the invention defined by the claims.

In the above-described embodiments, examples have been shown in which transfer of screen information from the mobile terminal 20 is controlled by determining whether or not switching of screens on the display unit 130 has been made. However, these are only examples, and transfer control may be started utilizing other substantially equivalent operations as triggers. For example, transfer of screen information from the mobile terminal 20 may be controlled in response to selection by a user of an application program for the media sources 150 in the electronic apparatus 40. Alternatively, an instruction for transfer control may be issued in response to activation of an application program for the media sources 150.

Each of the embodiments described above may be realized by itself or a plurality of the embodiments may be combined. For example, by combining the third and fourth embodiments, it is possible to increase the cycle time for transferring screen information and at the same time reduce the amount of screen information. Although a USB cable by way of example is used for connection between the mobile terminal 20 and the electronic apparatus 40 in the embodiments described above, any other wire cable or suitable wireless connection, such as e.g. Blue-tooth, may be used. Further, the functions of the electronic apparatus 40 and the mobile terminal 20 illustrated in the embodiments described above are only examples, and the present invention is not limited to these examples.

## Claims

1. An electronic apparatus (40) capable of displaying screen information provided by a mobile information terminal device (20), the apparatus comprising:
connection means (30, 110) for establishing a connection with the mobile information terminal device;
receiving means (120) for receiving the screen information through the connection means;
display means (130) for displaying the screen information or a screen of an application program installed on the electronic apparatus; and
transfer control means (160) that is configured, when the screen information is switched to the screen of the application program installed on the electronic apparatus, to restrict transfer of the screen information from the mobile information terminal device.

2. The electronic apparatus (40) according to Claim 1, wherein the transfer control means (160) transmits to the mobile information terminal device (20) an instruction for terminating the transfer of the screen information from the mobile information terminal device (20).

3. The electronic apparatus (40) according to any of Claim 1 or 2, wherein the transfer control means (160) terminates transmission, to the mobile information terminal device (20), of an update request instruction requesting an update of the screen information.

4. The electronic apparatus (40) according to any of Claims 1 to 3, wherein the transfer control means (160) transmits to the mobile information terminal device (40) a size change instruction for reducing a data size of video data of the screen information.

5. The electronic apparatus (40) according to any of Claims 1 to 4, wherein the transfer control means (160) increases a cycle time for transmitting instructions requesting transfer of the screen information.

6. The electronic apparatus (40) according to any one of Claims 1 to 5, wherein the transfer control means (160) transmits an instruction requesting transfer of the screen information when an interrupt generation signal is received from the mobile information terminal device (20) through the connection means (30).

7. The electronic apparatus (40) according to Claim 6, wherein the interrupt generation signal is transmitted when an intersection guide is displayed while being guided to a destination along a searched route.

8. The electronic apparatus according to any one of Claims 1 to 5, wherein the switching from the screen information to the screen of the application program installed on the electronic apparatus (40) is generated in response to a selection by a user of the application program installed on the electronic apparatus (40).

9. A method of transfer control of screen information in a media system (10) including a mobile information terminal device (20) and an electronic apparatus (40) capable of displaying screen information provided by the mobile information terminal device (20), the method comprising the steps of:
establishing connection between the mobile information terminal device (20) and the electronic apparatus (40);
selecting an application program installed on the mobile information terminal device (20) using input means of the electronic apparatus (40);
transferring screen information regarding the selected application program installed on the mobile information terminal device (20) to the electronic apparatus(40) from the mobile information terminal (40);
displaying the transmitted screen information in the electronic apparatus (40);
switching, when an application program installed on the electronic apparatus (40) is selected by a user, the screen information to a screen regarding the selected application program installed on the electronic apparatus (40); and
restricting transfer of the screen information in response to the selection of the application program by the user or the switching of the screen information.

10. The method of transfer control according to Claim 9, wherein the step of restricting transfer includes transmitting an instruction to the mobile information terminal device (20) for terminating the transfer of the screen information from the mobile information terminal device (20).

11. The method of transfer control according to any of Claim 9 or 10, wherein the step of restricting transfer includes terminating transmission to the mobile information terminal device (20) of an update request instruction requesting an update of the screen information.

12. The method of transfer control according to any of Claims 9 to 11, wherein the step of restricting transfer includes transmitting to the mobile information terminal device a size change instruction for reducing a data size of video data of the screen information.

13. The method of transfer control according to any of Claims 9 to 12, wherein the step of restricting transfer includes increasing a cycle time for transmitting instructions requesting transfer of the screen information.
